# EUROPEAN PATENT SPECIFICATION

(11) **EP 4 394 168 B1**
(45) Date of publication and mention of the grant of the patent: **18.11.2026**
(21) Application number: 23220616.9
(22) Date of filing: 28.12.2023
(51) Int. Cl.: F02C 7/04, F02C 7/16, F02C 7/32, F02K 3/06

(54) **NOSE CONE GENERATOR**
NASENKONUSGENERATOR
GÉNÉRATEUR DE CÔNE DE NEZ

(30) Priority: 28.12.2022 US 202218089982
(43) Date of publication of application: 03.07.2024
(73) Proprietor: Hamilton Sundstrand Corporation, Charlotte, NC 28217-4578 (US)
(72) Inventor: PAL, Debabrata, Hoffman Estates (US); CHRISTIANS, Joseph T., Vernon (US); KRECKLOW, Joshua J, Leaf River (US); LEMMERS JR., Glenn C., Loves Park (US); UZNANSKI, Kevin, Manchester (US)
(74) Representative: Dehns

(56) References cited:
- GB-A- 1 357 112
- US-A1- 2017 362 999
- US-A1- 2020 291 810

## Description

### BACKGROUND

Exemplary embodiments of the disclosure relate to a turbine engine, and more particularly, to a gas turbine engine including a generator.

Typical aircraft propulsion systems include one or more gas turbine engines. For certain propulsion systems, the gas turbine engines generally include a fan and a core arranged in flow communication with one another. Additionally, the core of the gas turbine engine general includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

Turbine engines used on an aircraft sometimes include power generators configured to provide power to one or more aircraft electrical loads or to various devices mounted on the engine, including propeller blade angle controllers and engine inlet deicing systems. Such power generators are typically arranged near the rear of the engine, within a tail cone. However, because the temperature of the exhaust gas flowing around the tail cone is very hot, expensive and complex cooling systems are required to thermally isolate the generator. Turbine engines are disclosed in GB 1 357 112 A, US 2017/362999 A1 and US 2020/291810 A1.

### BRIEF DESCRIPTION

According to one aspect, an engine is provided as defined by claim 1.

In embodiments the heat exchanger is arranged in direct contact with an exterior surface of the generator.

In embodiments the heat exchanger wraps about at least a portion of an outer periphery of the generator.

In embodiments an exterior surface of the generator is curved and the heat exchanger has a curvature complementary to the exterior surface of the generator.

In embodiments, the engine additionally includes a generator shaft and a coupling rotatably connecting the shaft and the generator shaft. The rotor is mounted to the generator shaft.

In embodiments the coupling further includes a transmission such that the generator shaft and the shaft are rotatable at different speeds.

In embodiments the coupling further includes a clutch operable to selectively connect the shaft and the rotor.

In embodiments the nose cone has at least one aperture formed therein.

In embodiments the engine casing has at least one aperture formed therein.

In embodiments an inlet of the flow path of the cooling fluid is arranged at the nose cone and an outlet of the flow path of the cooling fluid is arranged at the bypass duct, downstream from the fan.

In embodiments an inlet of the flow path of the cooling fluid is arranged at the bypass duct, downstream from the fan, and an outlet of the flow path of the cooling fluid is arranged at the nose cone.

In embodiments, the engine includes at least one vane disposed along the flow path of the cooling fluid.

In embodiments the at least one vane is mounted within the nose cone and is rotatable about the axis.

In embodiments, the engine includes a low-speed spool and a high-speed spool, wherein the shaft is a part of the low-speed spool.

In embodiments the engine is mounted to an aircraft.

### BRIEF DESCRIPTION OF THE DRAWINGS

The following descriptions should not be considered limiting in any way. With reference to the accompanying drawings, like elements are numbered alike:
FIG. 1 is a schematic diagram of a gas turbine engine according to an embodiment;
FIG. 2A is a perspective view of a portion of a fan section of the gas turbine engine of FIG. 1 according to an embodiment;
FIG. 2B is a cross-sectional view of the fan section of FIG. 2A according to an embodiment;
FIG. 3 is a schematic diagram of a fan section of an engine including a generator according to an embodiment;
FIG. 4 is a detailed view of the nose cone and generator of FIG. 3 according to an embodiment;
FIG. 5 is a schematic diagram of a fan section of an engine including a generator according to another embodiment;
FIG. 6 is a schematic diagram of a fan section of an engine including a generator according to another embodiment;
FIG. 7A is an end view of a generator and heat exchanger according to an embodiment; and
FIG. 7B is an end view of a generator and heat exchanger according to an embodiment.

### DETAILED DESCRIPTION

A detailed description of one or more embodiments of the disclosed apparatus and method are presented herein by way of exemplification and not limitation with reference to the Figures.

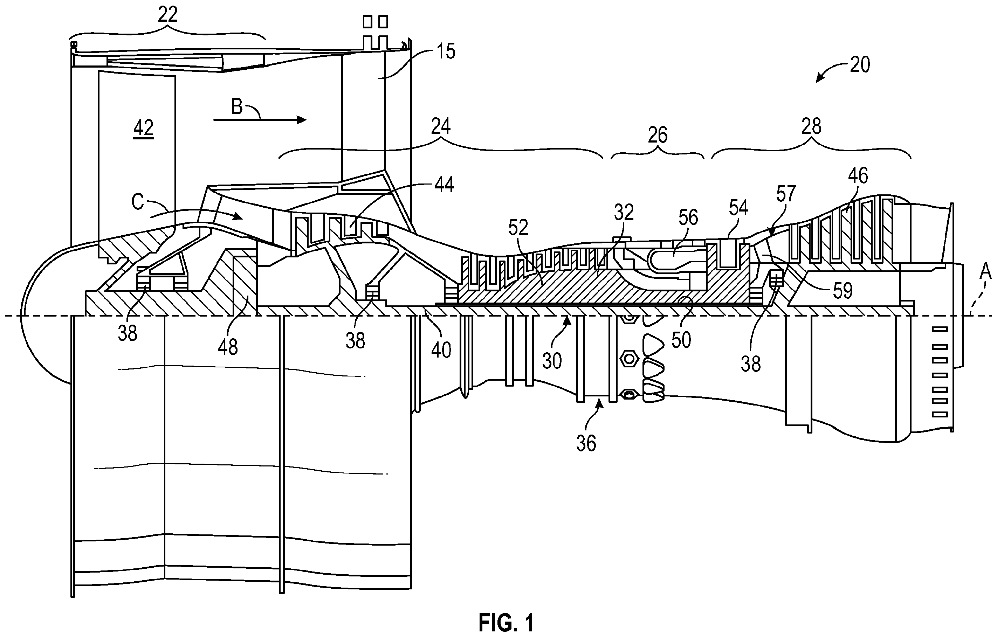

FIG. 1 schematically illustrates a gas turbine engine 20 suitable for use on an aircraft. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low-speed spool 30 and a high-speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low-speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low-speed spool 30. The high-speed spool 32 includes an outer shaft 50 that interconnects a second (or high) pressure compressor 52 and a second (or high) pressure turbine 54. A combustor 56 is arranged in exemplary gas turbine 20 between the high-pressure compressor 52 and the high-pressure turbine 54. A mid-turbine frame 57 of the engine static structure 36 is arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high-pressure turbine 54 and low-pressure turbine 46. The mid-turbine frame 57 includes airfoils 59 which are in the core airflow path C. The turbines 46, 54 rotationally drive the respective low-speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low-pressure compressor 44. It should be understood, however, that the above parameters are only exemplary of one embodiment of a gas turbine engine including a geared architecture and that the present disclosure is applicable to other gas turbine engines including direct drive turbofans.

A significant amount of thrust is provided by the bypass flow due to the high bypass ratio. The fan section 22 of the engine 20 is designed for a particular flight condition-typically cruise at about 0.8 Mach and about 10668 m (35000 feet). The flight condition of 0.8 Mach and 10668 m (35000 feet), with the engine at its best fuel consumption-also known as "bucket cruise Thrust Specific Fuel Consumption ('TSFCT')"-is the industry standard parameter of kilogramme (kg) (pound-mass (lbm)) of fuel per hour being burned divided by kilonewton (kN) (pound-force (lbf)) of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45. "Low corrected fan tip speed" is the actual fan tip speed in ft/sec divided by an industry standard temperature correction of [(Tram K)/(288,16 K)]^{0.5} ([(Tram °R)/(518.7 °R)]^{0.5}). The "Low corrected fan tip speed", as disclosed herein according to one non-limiting embodiment, is less than about 350,52 m/second (1150 ft/second).

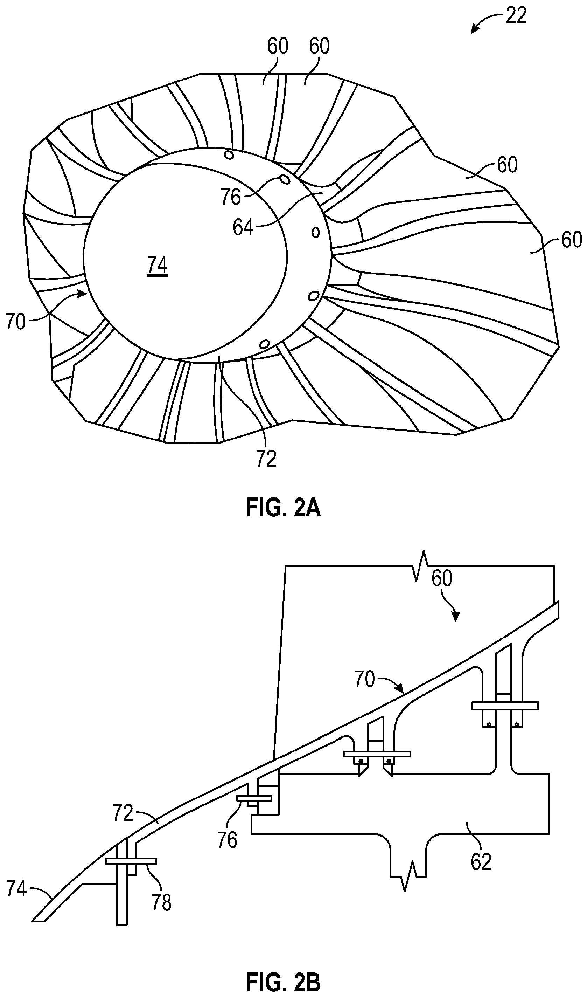

With reference now to FIGS. 2A and 2B, an example of a fan section 22 of an engine, such as engine 20 is illustrated in more detail. As shown, the fan section 22 includes a fan 42 having a plurality of fan blades 60 mounted to a fan hub 62. The fan 42 is driven by a shaft, such as the low-speed engine shaft 40 for example, about the axis of rotation A. In some embodiments, platforms 64 are arranged between adjacent fan blades 60 and may be integral or discrete from the fan blades 60.

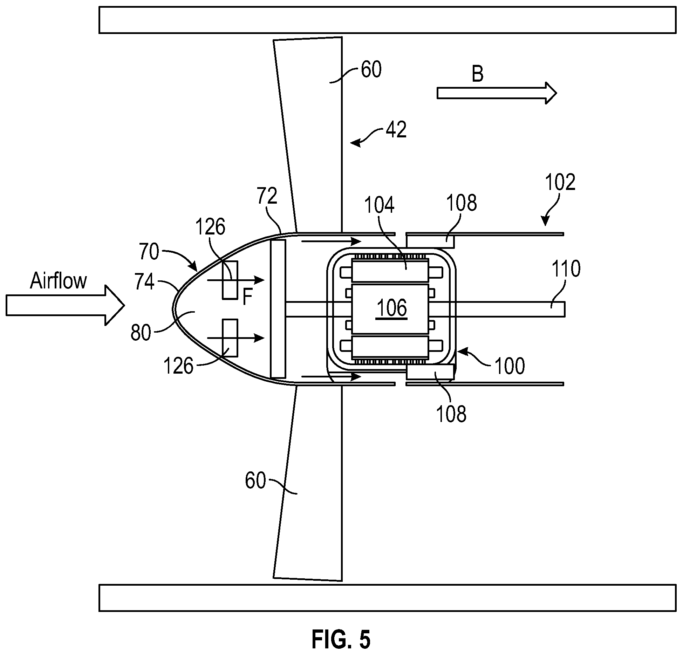

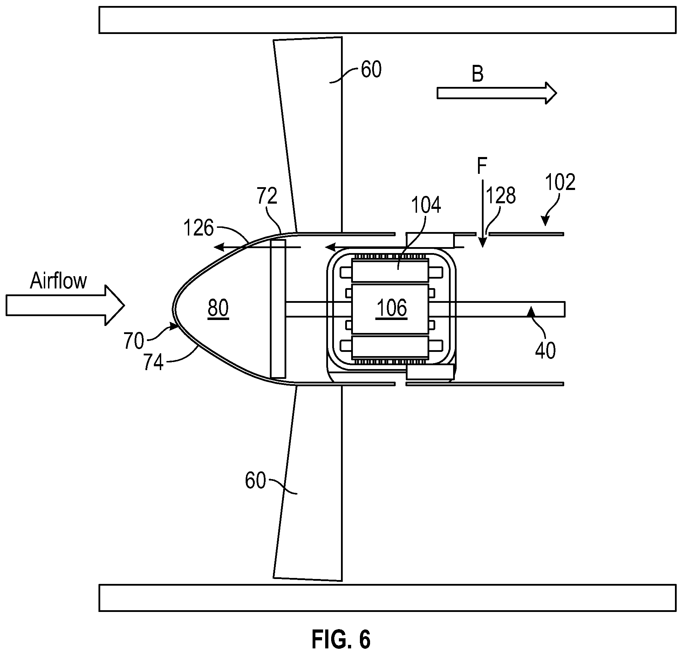

A nose cone or nose cone assembly 70 is arranged at the inlet of the engine to provide an aerodynamic inner flow path through the fan 42. In an embodiment, the nose cone 70 is arranged forward of the fan blades 60, and in some embodiments, is arranged forward of one or more structural vanes or struts (see FIGS. 5 and 6). The nose cone 70 may include a separate spinner 72 and cap 74. The spinner 72 may be annular in shape and the cap 74 may be generally conical or frustoconical in shape and with a smooth, curved exterior surface configured to provide a non-turbulent flow of air to the fan section 22. As shown, the spinner 72 may be secured to the fan hub 62 via one or more fasteners 76 such that the spinner 72 and the fan hub 62 rotate in unison about the axis A. Similarly, the cap 74 may be secured to the spinner 72 via one or more fasteners 78 (see FIG. 2B). However, it should be understood that in other embodiments, the spinner 72 and the cap 74 may be integrally formed as a single component.

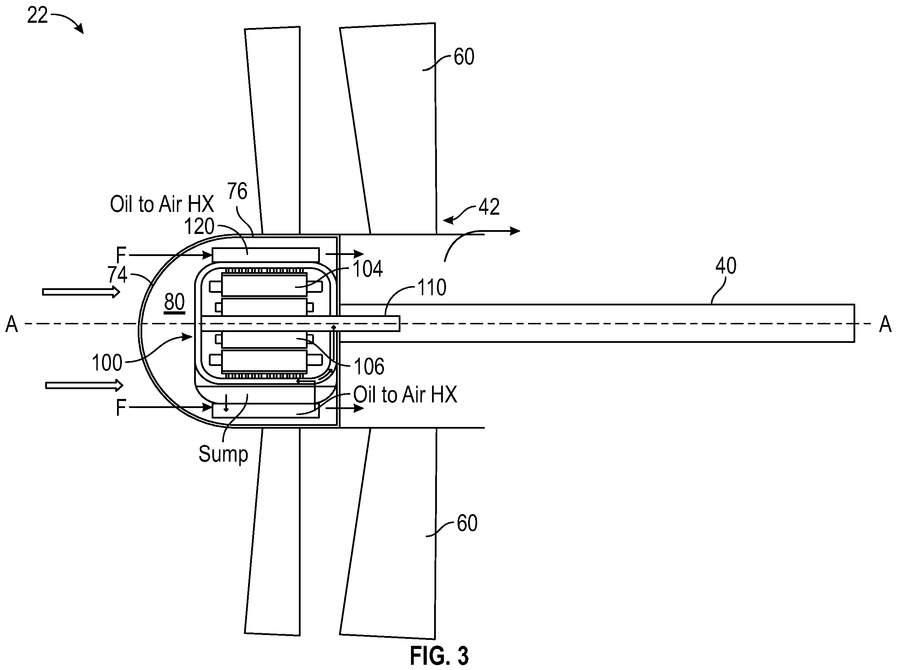

With reference now to FIGS. 3-7, in an embodiment, a generator 100 is arranged within the fan section 22, such as at least partially within the hollow interior 80 of the nose cone 70. In an embodiment, the generator 100 is located axially upstream from the fan 42 relative to an airflow through the fan section 22. In such embodiments, the entirety of the generator 100 may be arranged within the interior 80 of the nose cone 70. However, in other embodiments shown in FIGS. 5 and 6, at least a portion of the generator 100 may be located at or downstream from the fan 42 relative to the airflow through the fan section 22. In such embodiments, a portion of the generator 100 may be arranged within an engine casing 102 positioned downstream from and adjacent to the fan 42.

The generator 100 includes a stator 104 and a rotor 106, the rotor 106 being positioned generally adjacent to the stator 104. The stator 104 is fixed about the axis of rotation A and the rotor 106 is configured to rotate about the axis of rotation A. In the illustrated, non-limiting embodiments, the rotor 106 and the stator 104 are mounted concentrically about the axis of rotation A with the rotor 106 being arranged radially inward of the stator 104. However, embodiments where the rotor 106 is located radially outward of the stator 104 are also contemplated. Further, embodiments where the stator 104 and the rotor 106 have another relative configuration are also contemplated herein.

The stator 104 may be rotationally fixed directly to a stationary component of the engine 20 via one or more mounting flanges 108 (see FIG. 5) or via another suitable grounding structure. The rotor 106 may be rotationally coupled to and driven by the shaft 40. Accordingly, the rotor 106 may be considered to be rotatably coupled to the nose cone 70 and the fan 42. The rotor 106 may be directly driven by the shaft 40, or alternatively, may be mounted to a generator shaft 110 rotatably coupled to the shaft 40 via a suitable coupling. In some embodiments including a coupling, the generator shaft 110 may be configured to rotate at the same speed as the shaft 40. Alternatively, the coupling may include a transmission such that the generator shaft 110 rotates at a different speed, either faster or slower, than the shaft 40. In an embodiment, the coupling includes a clutch operable to selectively connect the shaft 40 to the rotor 106 of the generator 100. The clutch may be integral with the coupling or alternatively may be separate therefrom.

During operation of the engine 20, the shaft 40 rotates in response to rotation of the low-pressure turbine. As a result of the connection between the shaft 40 and the rotor 106, the torque of the low-pressure turbine 46 drives rotation of the rotor 106 about the axis A relative to the stator 104. The stator 104 may include one or more permanent magnets (not shown) and the rotor 106 may include at least one conductive wire coils (not shown). In another embodiment, the stator 104 may include one or more conductive wire coils and the rotor 106 may include at least one permanent magnet, or both the rotor 106 and the stator 104 may include conductive wire coils. However, it should be understood that the configurations described herein are intended as an example only and that any suitable configuration of a stator 104 and rotor 106 is within the scope of the disclosure. Regardless of the configuration, rotation of the rotor 106 relative to the stator 104 converts mechanical energy into electrical energy, ultimately generating electric power. This electrical energy may be communicated to a storage device, such as a battery for example, and/or may be provided to one or more loads of the aircraft, such as a subsystem of the aircraft for example.

It should be appreciated that in some embodiments, the generator 100 may also be operable as a motor, such as to start operation of the engine 20 for example. In such embodiments, torque is transmitted from the rotor 106 of the generator 100 to the shaft 40 and the low-pressure compressor 44 to effectively start the engine 20.

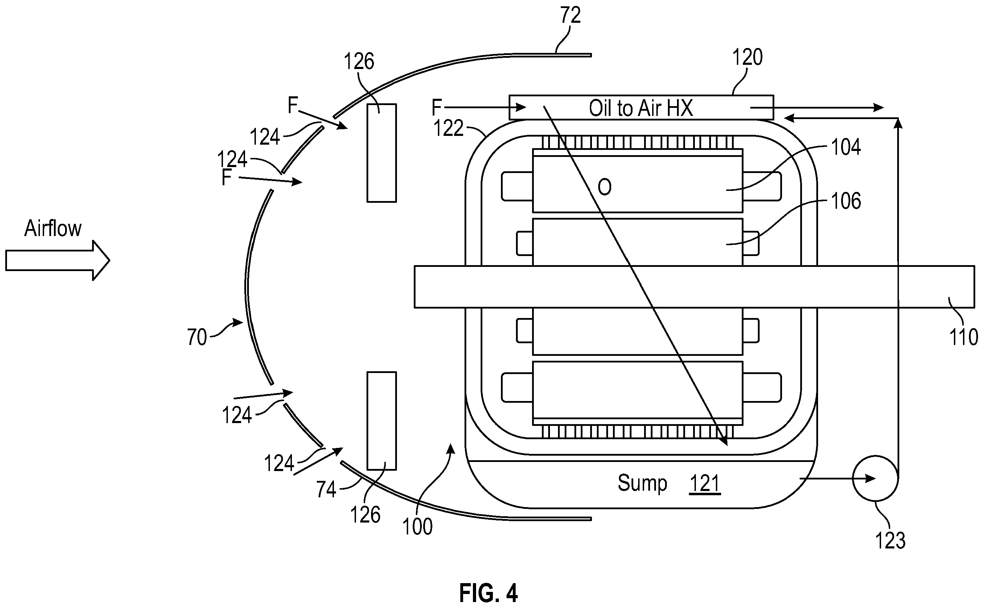

One or more components of a lubrication system operable to lubricate the generator 100 and/or the engine 20 may also be arranged within the hollow interior 80 of the nose cone 70. In an embodiment, a heat exchanger 120 fluidly coupled to the generator 100 is arranged within the interior 80 of the nose cone 70. The heat exchanger 120 is operable to cool a lubricant O (see FIG. 4) to be provided to one or more movable components of the generator 100. Once the lubricant O has been cooled within the heat exchanger 120, the lubricant O may be directed to the shaft 40 or 110, to at least one bearing (not shown), or to the back irons of the stator 104. As the lubricant flows to these components, heat from these components is absorbed by the lubricant O. The heated lubricant O may be collected, such as via gravity, within a sump 121 and a pump 123 (see FIG. 4) may be operable to deliver a flow of lubricant O from the sump 121 to the heat exchanger 120 to complete the loop. In the non-limiting embodiment illustrated is in the FIGS., the heat exchanger 120 is arranged at an exterior surface 122 of the generator 100, such as directly adjacent to the exterior surface of the stator 104 for example.

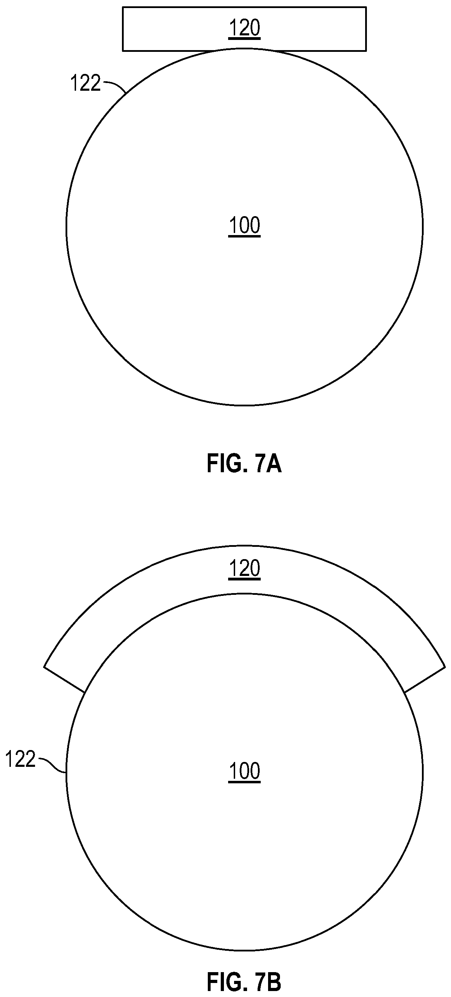

The heat exchanger 120 may be arranged about a portion of the periphery of the generator 100, or alternatively, may surround or encase the entire periphery of the generator 100. As shown in FIG. 7A, in an embodiment, the heat exchanger 120 has a standard, generally rectangular configuration. As shown, the heat exchanger 120 may be arranged generally tangent to the periphery of the generator 100. In another embodiment, best shown in FIG. 7B, the heat exchanger 120 may be formed with a curvature complementary to the curvature of the exterior surface of the generator 100. Accordingly, the heat exchanger 120 may be concentrically mounted about at least a portion of the generator 100. The heat exchanger 120 may have a plate fin configuration, a finned tube configuration, or another suitable configuration based on the amount of heat to be rejected and the available space.

Within the heat exchanger 120, the lubricant O, such as oil for example, is cooled by a cooling fluid F. The cooling fluid F may be a flow of air, such as the airflow provided from upstream of the nose cone 70. The flow path of the cooling fluid F may extend between the nose cone 70 and the bypass duct, downstream from the fan 42. In an embodiment best shown in FIG. 4, at least one, and in some embodiments, a plurality of apertures or through holes 124 are formed in the nose cone 70. The plurality of apertures 124 may be circumferentially and/or axially spaced from one another, and may be arranged randomly or in a pattern. The apertures 124 may define an inlet for the flow path of the cooling fluid F. In such embodiments, as the engine 20 operates, air is configured to flow through the apertures 124 into the interior 80 of the nose cone 70. Within the nose cone 70, at least a portion of this airflow is configured to pass through the heat exchanger 120, thereby cooling the lubricant O therein.

Having absorbed heat from the lubricant O, the cooling fluid F may be exhausted from the heat exchanger 120 to the ambient atmosphere or to an outlet fluidly connected to the bypass flow path B. For example, the heated airflow F may be configured to exit the nose cone 70 via one or more openings arranged adjacent to or downstream from the exit side of the fan 42. The higher pressure at the exit side of the fan 42 may facilitate movement of the airflow F through the interior 80 of the nose cone 70.

In an embodiment, one or more vanes or fan blades 126 are arranged within the interior 80 of the nose cone 70, upstream from the generator 100 relative to the airflow. Inclusion of these vanes 126 which are configured to rotate with the nose cone 70 is intended to facilitate movement (either pushing or pulling) of the airflow through the nose cone 70. In addition, the vanes 126 may be used to direct the airflow to a desired position within the nose cone 70, such as towards an inlet of the heat exchanger 120 for example. Further, a portion of the airflow provided to the interior 80 of the nose cone 70 via the apertures 124 may flow about the exterior surface 122 of the generator 100, or through the generator 100, thereby cooling the generator 100 itself.

In another embodiment, best shown in FIG. 6, the cooling fluid F provided to the heat exchanger 120 may be an airflow diverted from the bypass flow path B in the bypass duct at a location downstream from the exit side of the fan 42. As shown, one or more openings 128 may be formed in the engine casing 102 adjacent to the generator 100. The openings 128 may be directly adjacent to the exit side of the fan 42, or alternatively, may be located further downstream from the exit side of the fan 42 based on the position of the generator 100. At least a portion of the air flow output from the fan 42 along the bypass flow path B is configured to flow through the one or more openings 128 to the heat exchanger 120. As shown, one or more apertures or through holes 124 may be formed in the nose cone 70 and the hot air output from the heat exchanger 120 may be exhausted from the engine via the one or more apertures 124.

By positioning a generator 100 within the nose cone 70, less complex mounting and routing of feeder cables will be required. In addition, the complex thermal management required to cool the generator surrounded by turbine exhaust gas is eliminated. Further, in the event of failed engine, the fan 42 will windmill or rotate freely. As a result of this windmilling, power can be extracted by the nose cone generator 100, which can be provided to one or more loads of the engine or of the aircraft. Accordingly, via the generator 100, the fan 42 can be used as source of emergency power.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. Therefore, it is intended that the present disclosure not be limited to the particular embodiment disclosed, but that the present disclosure will include all embodiments falling within the scope of the claims.

## Claims

1. An engine configured to be located, in use, in a nacelle, the engine comprising:
an engine casing (102);
a shaft (40) defining an axis of rotation, the shaft extending through the engine casing;
a nose cone (70) rotatably coupled to the shaft, the nose cone having a hollow interior;
a generator (100) arranged at least partially within the hollow interior of the nose cone, the generator including a rotor (106) and a stator (104), the rotor being rotatably coupled to the shaft; and
a heat exchanger (120) mounted adjacent to the generator within the hollow interior of the nose cone, the heat exchanger being fluidly coupled to the generator, and wherein a lubricant and a cooling fluid are arranged in a heat exchange relationship within the heat exchanger; the engine **characterised by** further comprising:
a fan (42) having a plurality of blades (60) and rotatably mounted to the shaft; the fan configured to drive air along a bypass flow path B in a bypass duct defined within the nacelle in which the engine is, in use, located,
wherein a flow path of the cooling fluid is configured to extend, in use, between the nose cone and the bypass duct at a location downstream from the fan.

2. The engine of claim 1, wherein the heat exchanger (120) is arranged in direct contact with an exterior surface of the generator.

3. The engine of claim 1, wherein the heat exchanger (120) wraps about at least a portion of an outer periphery of the generator.

4. The engine of claim 3, wherein an exterior surface (122) of the generator is curved and the heat exchanger has a curvature complementary to the exterior surface of the generator.

5. The engine of any preceding claim, further comprising:
a generator shaft (110), the rotor being mounted to the generator shaft; and
a coupling rotatably connecting the shaft and the generator shaft.

6. The engine of claim 5, wherein the coupling further comprises a transmission such that the generator shaft and the shaft are rotatable at different speeds.

7. The engine of claim 5, wherein the coupling further comprises a clutch operable to selectively connect the shaft and the rotor.

8. The engine of any preceding claim, wherein the nose cone has at least one aperture (124) formed therein, or wherein the engine casing has at least one aperture formed therein.

9. The engine of any preceding claim, wherein an inlet of the flow path of the cooling fluid is arranged at the nose cone and an outlet of the flow path of the cooling fluid is arranged at the bypass duct, downstream from the fan, or wherein an inlet of the flow path of the cooling fluid is arranged at the bypass duct, downstream from the fan, and an outlet of the flow path of the cooling fluid is arranged at the nose cone.

10. The engine of any preceding claim, further comprising at least one vane (126) disposed along the flow path of the cooling fluid.

11. The engine of claim 10, wherein the at least one vane is mounted within the nose cone and is rotatable about the axis.

12. The engine of any preceding claim, further comprising a low-speed spool (30) and a high-speed spool (32), wherein the shaft is a part of the low-speed spool.

13. The engine of any preceding claim, wherein the engine is mounted to an aircraft.

## Patentansprüche

1. Triebwerk, das dazu konfiguriert ist, sich im Gebrauch in einer Gondel zu befinden, wobei das Triebwerk umfasst:
ein Triebwerksgehäuse (102);
eine Welle (40), die eine Rotationsachse definiert, wobei sich die Welle durch das Triebwerksgehäuse erstreckt;
einen Nasenkonus (70), der drehbar mit der Welle gekoppelt ist, wobei der Nasenkonus einen hohlen Innenraum aufweist;
einen Generator (100), der zumindest teilweise innerhalb des hohlen Innenraums des Nasenkonus angeordnet ist, wobei der Generator einen Rotor (106) und einen Stator (104) einschließt, wobei der Rotor drehbar mit der Welle gekoppelt ist; und
einen Wärmetauscher (120), der benachbart zu dem Generator innerhalb des hohlen Innenraums des Nasenkonus montiert ist, wobei der Wärmetauscher mit dem Generator fluidisch gekoppelt ist, und wobei ein Schmiermittel und ein Kühlfluid in einer Wärmeaustauschbeziehung innerhalb des Wärmetauschers angeordnet sind; wobei das Triebwerk **dadurch gekennzeichnet ist, dass** es ferner umfasst:
einen Fan (42), der eine Vielzahl von Laufschaufeln (60) aufweist und drehbar an der Welle montiert ist; wobei der Fan dazu konfiguriert ist, Luft entlang eines Bypassströmungspfads B in einem Bypasskanal anzutreiben, der innerhalb der Gondel definiert ist, in der sich das Triebwerk im Gebrauch befindet,
wobei ein Strömungspfad des Kühlfluids dazu konfiguriert ist, sich im Gebrauch zwischen dem Nasenkonus und dem Bypasskanal an einer Stelle stromabwärts von dem Fan zu erstrecken.

2. Triebwerk nach Anspruch 1, wobei der Wärmetauscher (120) in direktem Kontakt mit einer Außenoberfläche des Generators angeordnet ist.

3. Triebwerk nach Anspruch 1, wobei sich der Wärmetauscher (120) um mindestens einen Teil eines Außenumfangs des Generators wickelt.

4. Triebwerk nach Anspruch 3, wobei eine Außenoberfläche (122) des Generators gekrümmt ist und der Wärmetauscher eine Krümmung aufweist, die komplementär zu der Außenoberfläche des Generators ist.

5. Triebwerk nach einem der vorhergehenden Ansprüche, ferner umfassend:
eine Generatorwelle (110), wobei der Rotor an der Generatorwelle montiert ist; und
eine Kopplung, die die Welle und die Generatorwelle drehbar verbindet.

6. Triebwerk nach Anspruch 5, wobei die Kopplung ferner ein Getriebe umfasst, sodass die Generatorwelle und die Welle mit unterschiedlichen Drehzahlen drehbar sind.

7. Triebwerk nach Anspruch 5, wobei die Kopplung ferner eine Kupplung umfasst, die betreibbar ist, um die Welle und den Rotor selektiv zu verbinden.

8. Triebwerk nach einem der vorhergehenden Ansprüche, wobei der Nasenkonus mindestens eine darin ausgebildete Öffnung (124) aufweist, oder wobei das Triebwerksgehäuse mindestens eine darin ausgebildete Öffnung aufweist.

9. Triebwerk nach einem der vorhergehenden Ansprüche, wobei ein Einlass des Strömungspfads des Kühlfluids an dem Nasenkonus angeordnet ist und ein Auslass des Strömungspfads des Kühlfluids an dem Bypasskanal, stromabwärts von dem Fan, angeordnet ist, oder wobei ein Einlass des Strömungspfads des Kühlfluids an dem Bypasskanal, stromabwärts von dem Fan, angeordnet ist und ein Auslass des Strömungspfads des Kühlfluids an dem Nasenkonus angeordnet ist.

10. Triebwerk nach einem der vorhergehenden Ansprüche, ferner umfassend mindestens eine Schaufel (126), die entlang des Strömungspfads des Kühlfluids eingerichtet ist.

11. Triebwerk nach Anspruch 10, wobei die mindestens eine Schaufel innerhalb des Nasenkonus montiert ist und um die Achse drehbar ist.

12. Triebwerk nach einem der vorhergehenden Ansprüche, ferner umfassend einen Niederdruckläufer (30) und einen Hochdruckläufer (32), wobei die Welle ein Teil des Niederdruckläufers ist.

13. Triebwerk nach einem der vorhergehenden Ansprüche, wobei das Triebwerk an einem Luftfahrzeug montiert ist.

## Revendications

1. Moteur configuré pour être placé, pendant son utilisation, dans une nacelle, le moteur comprenant :
un carter de moteur (102) ;
un arbre (40) définissant un axe de rotation, l'arbre s'étendant à travers le carter de moteur ;
un cône de nez (70) accouplé en rotation à l'arbre, le cône de nez ayant un intérieur creux ;
un générateur (100) agencé au moins en partie au sein de l'intérieur creux du cône de nez, le générateur comportant un rotor (106) et un stator (104), le rotor étant accouplé en rotation à l'arbre ; et
un échangeur de chaleur (120) monté de manière adjacente au générateur au sein de l'intérieur creux du cône de nez, l'échangeur de chaleur étant accouplé fluidiquement au générateur, et dans lequel un lubrifiant et un fluide de refroidissement sont agencés en relation d'échange de chaleur au sein de l'échangeur de chaleur ; le moteur étant **caractérisé en ce qu'**il comprend en outre :
un ventilateur (42) ayant une pluralité de pales (60) et monté en rotation sur l'arbre ; le ventilateur étant configuré pour entraîner l'air le long d'un trajet d'écoulement de dérivation B dans un conduit de dérivation défini au sein de la nacelle dans laquelle le moteur est placé, pendant son utilisation,
dans lequel un trajet d'écoulement du fluide de refroidissement est configuré pour s'étendre, pendant son utilisation, entre le cône de nez et le conduit de dérivation à un emplacement en aval du ventilateur.

2. Moteur selon la revendication 1, dans lequel l'échangeur de chaleur (120) est agencé en contact direct avec une surface extérieure du générateur.

3. Moteur selon la revendication 1, dans lequel l'échangeur de chaleur (120) enveloppe au moins une partie d'une périphérie extérieure du générateur.

4. Moteur selon la revendication 3, dans lequel une surface extérieure (122) du générateur est incurvée et l'échangeur de chaleur a une courbure complémentaire à la surface extérieure du générateur.

5. Moteur selon une quelconque revendication précédente, comprenant en outre :
un arbre de générateur (110), le rotor étant monté sur l'arbre de générateur ; et
un accouplement reliant en rotation l'arbre et l'arbre de générateur.

6. Moteur selon la revendication 5, dans lequel l'accouplement comprend en outre une transmission de telle sorte que l'arbre de générateur et l'arbre puissent tourner à des vitesses différentes.

7. Moteur selon la revendication 5, dans lequel l'accouplement comprend en outre un embrayage permettant de relier sélectivement l'arbre et le rotor.

8. Moteur selon une quelconque revendication précédente, dans lequel le cône de nez présente au moins une ouverture (124) formée en son sein, ou dans lequel le carter de moteur présente au moins une ouverture formée en son sein.

9. Moteur selon une quelconque revendication précédente, dans lequel une entrée du trajet d'écoulement du fluide de refroidissement est agencée au niveau du cône de nez et une sortie du trajet d'écoulement du fluide de refroidissement est agencée au niveau du conduit de dérivation, en aval du ventilateur, ou dans lequel une entrée du trajet d'écoulement du fluide de refroidissement est agencée au niveau du conduit de dérivation, en aval du ventilateur, et une sortie du trajet d'écoulement du fluide de refroidissement est agencée au niveau du cône de nez.

10. Moteur selon une quelconque revendication précédente, comprenant en outre au moins une ailette (126) disposée le long du trajet d'écoulement du fluide de refroidissement.

11. Moteur selon la revendication 10, dans lequel l'au moins une ailette est montée au sein du cône de nez et peut tourner autour de l'axe.

12. Moteur selon une quelconque revendication précédente, comprenant en outre un corps à basse vitesse (30) et un corps à haute vitesse (32), dans lequel l'arbre fait partie du corps à basse vitesse.

13. Moteur selon une quelconque revendication précédente, dans lequel le moteur est monté sur un aéronef.
